# EUROPEAN PATENT SPECIFICATION

(11) **EP 1 031 407 B1**
(45) Date of publication and mention of the grant of the patent: **20.11.2002**
(21) Application number: 99200530.6
(22) Date of filing: 23.02.1999
(51) Int. Cl.: B29D 17/00

(54) **A method for producing a disc as well as a disc obtained by such a method**
Ein Verfahren zur Herstellung einer Scheibe und eine so hergestellte Scheibe
Procédé pour la fabrication d'un disque et un disque ainsi produit

(43) Date of publication of application: 30.08.2000
(73) Proprietor: OTB Group B.V., 5657 EB Eindhoven (NL)
(72) Inventor: Van Vlimmeren, Q., A., G., 5508 AB Veldhoven (NL); Andersson, G.,B., G., 19143 Sollentuna (SV)
(74) Representative: Prins, Adrianus Willem

(56) References cited:
- EP-A- 0 368 442
- WO-A-87/02934
- WO-A-87/02935
- WO-A-97/35720
- US-A- 4 450 553
- US-A- 5 688 447
- US-A- 5 700 539
- US-A- 5 708 652
- US-A- 5 820 794

## Description

The invention relates to a method of producing a disc comprising at least one substrate and at least one information layer on said substrate, said method comprising the steps of
- bringing said substrate in parallel relationship with a stamper comprising a negative of the information layer to be formed on said substrate whereby a gap is located between said substrate and said stamper,
- injecting a lacquer into said gap between said substrate and said stamper,
- rotating at least said stamper,
- moving said substrate and said stamper to each other,
- curing the layer of lacquer formed between said substrate and said stamper, and
- removing said stamper, whilst leaving said layer of cured lacquer with the information layer formed therein onto said substrate.

The invention also relates to a disc obtained by such a method.

From Japanese patent application 1-161252, filed June 24, 1989 (JP 03029134) a method is known to produce a disc comprising one single information layer formed in a layer of resin which is applied to the substrate. On said layer of resin a recording layer is applied after which the desired disc is obtained.

Since the so formed disc has only one information layer, the storage capacity of said disc is relatively poor.

US-A-5 820 794 discloses a manufacturing method for manufacturing an optical recording medium such as a video or compact disc and more particularly to a method for manufacturing a multi-layer optical recording medium. The known method comprises the steps of: maintaining a transparent substrate on which a reflecting layer and a first recording layer are formed and a stamp having a second recording layer on its upper surface at a predetermined distance, facing each other; closing off temporarily one side of a central hole formed in the separated stamp and the transparent substrate and supplying the resin under pressure between the stamp and the transparent substrate through the open side of the central hole; and opening completely the central hole by removing the remaining resin after the supply step is finished. After that ultraviolet rays irradiates the resin layer through the transparent substrate to cure the resin. The multi-layer optical recording medium manufacture method is finished by forming a reflecting film and a protection film on the free surface of the resin layer on which the second recording layer is formed. In fact, in this known method the additional resin layer is formed by injection moulding. Rotation of the stamper and movement of the substrate and the stamper while the resin is still not cured does not occur in the known method.

It is an object of the invention to provide a method for producing a disc having at least one substrate with at least two information layers whereby due to the method of the invention, the information layers can be applied relatively easy on said substrate.

This object is achieved by the method according to the invention in that before bringing said substrate in parallel relationship with said stamper, said substrate is provided with a first information layer and a semi-reflective layer located thereon, whereby said layer of lacquer is formed onto said semi-reflective layer.

By forming the layer of lacquer with an information layer therein on an earlier applied first information layer which is coated with a semi-reflective layer, a relatively quick and reliable method is obtained to produce a disc with two information layers. Due to the semi-reflective layer, the second information layer can be seen through the substrate and the first information layer.

The invention will further be explained with reference to the drawing in which
figure 1 shows a cross section of a device for performing the method according to the invention,
figure 2 shows a detail of the device as shown in figure 1,
figure 3 shows a disc produced with the method according to the invention comprising two information layers,
figure 4 shows a disc produced with the method according to the invention comprising four information layers,
figure 5 shows a detail of the disc as shown in figure 4.

Like parts are numbered alike in the figures.

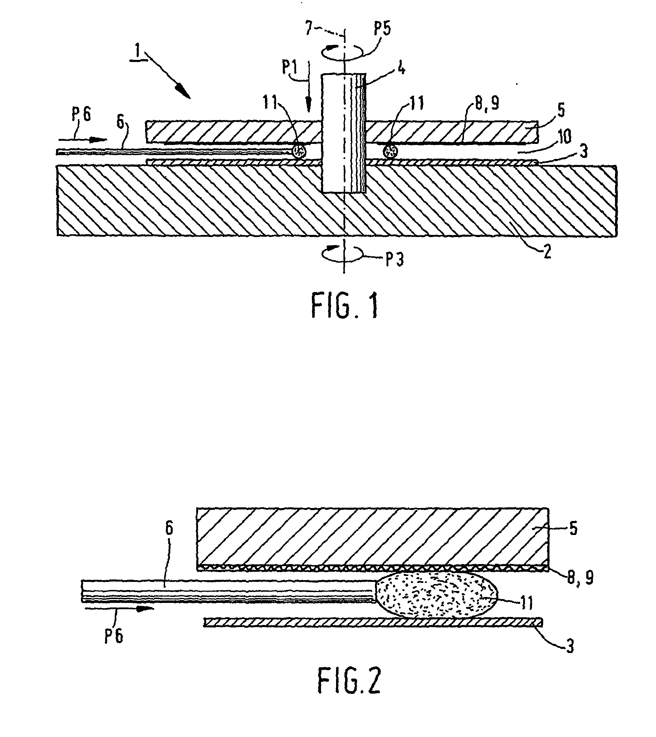

Figure 1 shows a cross view of a device 1 for performing a method according to the invention. The device 1 comprises a table 2 which is rotatable in and opposite to a direction indicated by arrow P3 and a stamper 3 removably connected to the table 2 around a centring device 4. On a side directed away from the table 2 the stamper 3 is provided with a negative of an information layer to be applied. The device 1 comprises also a substrate clamping device (not shown) to move the substrate 5 in and opposite to a direction indicated by arrow P1 and to rotate the substrate 5 in and opposite to a direction indicated by arrow P5 around the centring device 4.

Device 1 also comprises a lacquer injecting needle 6 which is movable in and opposite to a direction indicated by arrow P6, which extends perpendicular to a centreline 7 of the centring device 4.

The substrate 5 is provided with a first information layer 8, comprising pits and lands and a semi-reflective layer 9 of for example gold or silicon, covering said first information layer 8. The substrate 5 has a thickness of about 0,6 mm.

The method of the invention to apply a second information layer to the substrate 5 will now be explained.

By means of the clamping device the substrate 5 is moved in direction P1 into parallel relationship with the stamper 3 until a desired gap 10 of about 1 à 2 mm, for example, is obtained between the substrate 5 and the stamper 3. The semi-reflective layer 9 on the substrate 5 is directed to the stamper 3.

The substrate 5 and the stamper 3 are now being rotated in the directions P5 and P3 with the same, relatively low speed of a few revolutions per second.

The needle 6 is inserted in the gap 10 and moved in the direction P6 to inject a lacquer 11 at about 20 à 40 mm, for example, of the centring device 4 between the substrate 5 and the stamper 3. While injecting the lacquer, the lacquer gets in contact with the substrate 5 and stamper 3 at the same time so that no bubbles will occur. Due to the rotation of the substrate 5 and the stamper 3 a ring-shaped bead of lacquer 11 is created.

After the desired amount of lacquer 11 has been applied, the needle 6 is being removed.

Then, the substrate 5 is displaced into the direction P1 to reduce the gap 10 to a desired distance of about 0,2 à 0,3 mm, for example. The substrate 5 and stamper 3 are now being rotated at different speeds, at for example 2 revolutions per second and 5-6 revolutions per second respectively, due to which the lacquer 11 is smeared out. It is also possible to rotate the substrate 5 and the stamper 3 with the same speed but in different directions.

After a predetermined amount of revolutions or time, the clamping device is removed, whilst leaving the substrate 5 on the layer of lacquer 11. Then the substrate 5 and stamper 3 are rotated together with a speed of about 3000 revolutions per second to spin out the lacquer throughout the whole gap 10. The gap 10 is thereby reduced to about 55 µm, for example.

The lacquer 11, for example an ultraviolet curable resin, can now be cured by means of an UV-source, whereby the UV-radiation can be irradiated through the substrate 5, for example.

After curing, the substrate 5 and the layer of lacquer 11 formed thereon are peeled off from the stamper 3. The outside of the layer of lacquer 11 now comprises the desired second information layer 12. On said second information layer 12 a reflective layer 13 of for example aluminium can be applied.

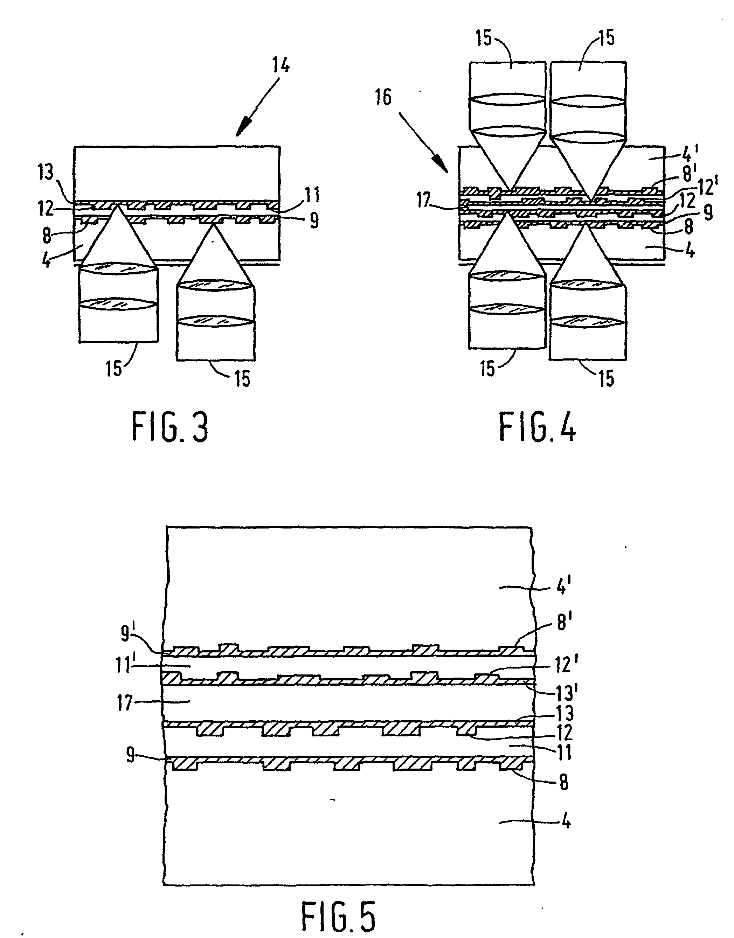

Figure 3 shows a disc 14 comprising two information layers 8, 12 applied with the method according to the invention as well as an additional substrate 15 to give the disc 14 a desired thickness. The substrate 15 can be glued for example to the reflective layer 13.

Figure 3 also shows two positions of heads 15 by means of which the information on the information layers 12 can be read.

Figures 4 and 5 show a disc 16 comprising four information layers 8, 8', 12, 12'. The disc 16 comprises two substrates 4, 4' which are each provided with two information layers 8, 12; 8', 12' by means of the method according to the invention. The reflective layers 13, 13' of the substrates 4, 4' are glued to each other by means of a layer 17 applied by a method as described for example in WO 97/36737 or another bonding method.

Stamper 3 is made of or provided with a layer of plastic or metal, which has a relatively poor adherence to the lacquer with respect to the adherence between the semi-reflective layer 9 and the lacquer to ensure that the layer of lacquer will maintain attached to the semi-reflective layer 9 when peeling off the stamper 3.

The plastic might be silicon rubber or teflon. The metal might be gold or chrome.

## Claims

1. A method of producing a disc (14, 16) comprising at least one substrate (5; 4, 4')and at least one information layer (8, 8', 12, 12') on said substrate, said method comprising the steps of
- bringing said substrate (5, 4, 4') in parallel relationship with a stamper (3) comprising a negative of the information layer (8, 8', 12, 12') to be formed on said substrate (5, 4, 4') whereby a gap (10) is located between said substrate (5, 4, 4') and said stamper (3),
- injecting a lacquer into said gap (10) between said substrate (5, 4, 4') and said stamper (3),
- rotating at least said stamper (3),
- moving said substrate (3, 4, 4')and said stamper (3) to each other,
- curing the layer of lacquer (11) formed between said substrate (5, 4, 4') and said stamper (3), and
- removing said stamper (3), whilst leaving said layer of cured lacquer (11) with the information layer (12, 12') formed therein onto said substrate,
**characterized in that** before bringing said substrate (5, 4, 4') in parallel relationship with said stamper (3), said substrate (5, 4, 4') is provided with a first information layer (8, 8') and a semi-reflective layer (9) located thereon, whereby said layer of lacquer (11) is formed onto said semi-reflective layer (9).

2. A method according to claim 1, **characterized in that** a reflective layer (13) is applied onto said information layer (12, 12') formed in said layer of lacquer (11).

3. Method according to claim 2, **characterized in that** the method comprises the step of connecting together at least two of said substrates (5, 15; 4, 4'), whereby between the reflective layers of said substrates (5, 15, 4, 4') a bonding layer is applied.

4. Method according to one of the preceding claims, **characterized in that** whilst rotating said stamper (3), said substrate (5, 4, 4') is rotated as well with the speed as said stamper (3).

5. Method according to one of the preceding claims, **characterized in that** during and/or after moving said substrate (5, 4, 4') and said stamper (3) to each other, said substrate (5, 4, 4') and said stamper (3) are rotated with different, relatively low speeds to smear out said lacquer.

6. Method according to one of the preceding claims, **characterized in that** said substrate (5, 4, 4') and said stamper (3) are rotated together at a relatively high speed to spin out said lacquer,

7. Method according to one of the preceding claims, **characterized in that** at least the side of said stamper (3) directed to said substrate (5, 4, 4') is coated with a plastic or metal having a relatively poor adherence to said lacquer.

8. Method according to one of the preceding claims, **characterized in that** said stamper (3) is made of plastic.

9. Method according to one of the preceding claims, **characterized in that** the injected lacquer (11) contacts the substrate and stamper (3) at about the same time.

## Patentansprüche

1. Verfahren zum Herstellen einer zumindest ein Substrat (5; 4, 4') und auf dem Substrat zumindest eine Informationsschicht (8, 8', 12, 12') umfassenden Scheibe (14, 16), mit den folgenden Schritten:
- Bringen des Substrats (5,4,4') in eine parallele Beziehung zu einem Stempel (3), der ein Negativ der auf dem Substrat (5, 4, 4') auszubildenden Informationsschicht (8, 8', 12, 12') umfasst, wobei zwischen dem Substrat (5, 4, 4') und dem Stempel (3) ein Spalt (10) gelegen ist,
- Einspritzen eines Lacks in den Spalt (10) zwischen dem Substrat (5, 4, 4') und dem Stempel (3),
- Drehen des zumindest einen Stempels (3),
- Bewegen des Substrats (5, 4, 4') und des Stempels (3) zueinander,
- Aushärten der zwischen dem Substrat (5, 4, 4') und dem Stempel (3) ausgebildeten Lackschicht (11), und
- Entfernen des Stempels (3) unter Lassen der Schicht ausgehärteten Lacks (11) mit der in Ihr ausgebildeten Informationsschicht (12, 12') auf dem Substrat (5, 4, 4'),
**dadurch gekennzeichnet, dass** das Substrat (5, 4, 4') vor dem Bringen des Substrats (5, 4, 4') in eine parallele Beziehung zu dem Stempel (3) mit einer ersten Informationsschicht (8, 8') und einer auf ihr gelegenen, semireflektierenden Schicht (9) versehen wird, wodurch die Lackschicht (11) auf der semireflektierenden Schicht (9) ausgebildet wird.

2. Verfahren nach Anspruch 1, **dadurch gekennzeichnet, dass** auf die in der Lackschicht (11) ausgebildete Informationsschicht (12, 12') eine reflektierende Schicht (13) aufgebracht wird.

3. Verfahren nach Anspruch 2, **dadurch gekennzeichnet, dass** das Verfahren den Schritt des miteinander Verbindens von zumindest zwei der Substrate (5, 15; 4, 4') umfasst, wobei zwischen den reflektierenden Schichten der Substrate (5, 15; 4, 4') eine Bindeschicht aufgebracht wird.

4. Verfahren nach einem der vorhergehenden Ansprüche, **dadurch gekennzeichnet, dass** während des Drehens des Stempels (3) auch das Substrat (5, 4, 4') mit der Geschwindigkeit wie der Stempel (3) gedreht wird.

5. Verfahren nach einem der vorhergehenden Ansprüche, **dadurch gekennzeichnet, dass** das Substrat (5, 4, 4') und der Stempel (3) während und/oder nach dem Bewegen des Substrats (5, 4, 4') und des Stempels (3) zueinander mit unterschiedlichen, relativ niedrigen Geschwindigkeiten gedreht werden, um den Lack auszuschmieren.

6. Verfahren nach einem der vorhergehenden Ansprüche, **dadurch gekennzeichnet, dass** das Substrat (5, 4, 4') und der Stempel (3) zusammen mit einer relativ hohen Geschwindigkeit gedreht werden, um den Lack auszuschleudern.

7. Verfahren nach einem der vorhergehenden Ansprüche, **dadurch gekennzeichnet, dass** zumindest die zum Substrat (5, 4, 4') hin gerichtete Seite des Stempels (3) mit einem Kunststoff oder Metall relativ niedriger Haftung an dem Lack beschichtet sind.

8. Verfahren nach einem der vorhergehenden Ansprüche, **dadurch gekennzeichnet, dass** der Stempel (3) aus Kunststoff hergestellt ist.

9. Verfahren nach einem der vorhergehenden Ansprüche, **dadurch gekennzeichnet, dass** der eingespritzte Lack (11) das Substrat und den Stempel (3) ungefähr zeitgleich berührt.

## Revendications

1. Procédé de fabrication d'un disque (14, 16) comprenant au moins un substrat (5, 4, 4') et au moins une couche d'informations (8, 8', 12, 12') sur ledit substrat, ledit procédé comprenant les étapes consistant à :
- amener ledit substrat (5, 4, 4') en une relation parallèle avec un poinçon (3) comprenant un négatif de la couche d'informations (8, 8', 12, 12') à former sur ledit substrat (5, 4, 4') par quoi un espace (10) est localisé entre ledit substrat (5, 4, 4') et ledit poinçon (3),
- injecter un vernis dans ledit espace (10) entre ledit substrat (5, 4, 4') et ledit poinçon (3),
- faire tourner au moins ledit poinçon (3),
- déplacer ledit substrat (3, 4, 4') et ledit poinçon (3) l'un vers l'autre,
- durcir la couche de vernis (11) formée entre ledit substrat (5, 4, 4') et ledit poinçon (3) et
- retirer ledit poinçon (3) tout en laissant ladite couche de vernis durcie (11) avec la couche d'informations (12, 12') formée dans celle-ci sur ledit substrat,
**caractérisé en ce que**, avant d'amener ledit substrat (5, 4, 4') en une relation parallèle audit poinçon (3), ledit substrat (5, 4, 4') est pourvu d'une première couche d'informations (8, 8') et d'une couche semi-réfléchissante (9) située sur celle-ci, par quoi ladite couche de vernis (11) est formée sur ladite couche semi-réfléchissante (9).

2. Procédé selon la revendication 1, **caractérisé en ce qu'**une couche réfléchissante (13) est appliquée sur ladite couche d'informations (12, 12') formée dans ladite couche de vernis (11).

3. Procédé selon la revendication 2, **caractérisé en ce que** le procédé comprend l'étape consistant à relier au moins deux desdits substrats (5, 15 ; 4, 4') par quoi est appliqué entre les couches réfléchissantes desdits substrats (5, 15 ; 4, 4') une couche de liaison.

4. Procédé selon l'une des revendications précédentes, **caractérisé en ce que** pendant la rotation dudit poinçon (3), ledit substrat (5, 4, 4') est aussi entraîné en rotation à la même vitesse que ledit poinçon (3).

5. Procédé selon l'une des revendications précédentes, **caractérisé en ce que** pendant et/ou après le déplacement dudit substrat (5, 4, 4') et dudit poinçon (3) l'un vers l'autre, ledit substrat (5, 4, 4') et ledit poinçon (3) sont entraînés en rotation à des vitesses différentes, relativement basses pour étaler ledit vernis.

6. Procédé selon l'une des revendications précédentes, **caractérisé en ce que** ledit substrat (5, 4, 4') et ledit poinçon (3) sont entraînés en rotation ensemble à une vitesse relativement élevée pour essorer ledit vernis.

7. Procédé selon l'une des revendications précédentes, **caractérisé en ce qu'**au moins le côté dudit poinçon (3) orienté vers ledit substrat (5, 4, 4') est revêtu d'un plastique ou d'un métal d'une adhérence relativement médiocre audit vernis.

8. Procédé selon l'une des revendications précédentes, **caractérisé en ce que** ledit poinçon (3) est réalisé en plastique.

9. Procédé selon l'une des revendications précédentes, **caractérisé en ce que** le vernis injecté (11) vient en contact avec le substrat et le poinçon (3) environ en même temps.
